# EUROPÄISCHE PATENTSCHRIFT

(11) **EP 2 461 995 B1**
(45) Veröffentlichungstag und Bekanntmachung des Hinweises auf die Patenterteilung: **24.12.2014**
(21) Anmeldenummer: 10734904.5
(22) Anmeldetag: 26.06.2010
(51) Int. Cl.: B60J 7/043, B60J 7/14

(54) **DACHMODUL**
ROOF MODULE
MODULE DE TOIT

(30) Priorität: 04.08.2009 DE 102009036046
(43) Veröffentlichungstag der Anmeldung: 13.06.2012
(73) Patentinhaber: Daimler AG, 70327 Stuttgart (DE)
(72) Erfinder: BREULING, Andreas, 75365 Calw (DE); GUCKEL, Martin, 75242 Neuhausen (DE); HEIDT, Erich, 71272 Renningen (DE); SCHRADER, Jürgen, 71093 Weil im Schönbuch (DE)
(74) Vertreter: JENSEN & SON
(86) Internationale Anmeldenummer: PCT/EP2010/003913
(87) Internationale Veröffentlichungsnummer: WO 2011/015257

(56) Entgegenhaltungen:
- EP-A1- 1 637 439
- EP-A2- 1 180 471
- DE-B3- 10 254 370
- DE-U1- 29 704 030

## Beschreibung

Die Erfindung betrifft ein Dachmodul für ein Kraftfahrzeug mit einem Klappverdeck, wobei das Dachmodul aus mehreren zusammenwirkenden und miteinander verbundenen Bauteilen besteht.

Eingesetzt werden solche Dachmodule in Cabrioletfahrzeugen, die mit einem Klappverdeck ausgestattet sind, das heißt mit einem Verdeck, das aus zumindest zwei gegeneinander bewegbaren, starren Elementen besteht.

Die DE 102 54 370 B3 zeigt beispielsweise ein Dachmodul, das einen Grundträger in Form eines Grundrahmens aufweist, durch den ein Dachbeplankungsteil getragen ist und an dessen seitlichen Randbereichen zusätzliche Verkleidungsteile angeordnet werden können.

Die der Erfindung zu Grunde liegende Aufgabe ist es, ein Dachmodul auszubilden, bei dem die einzelnen Bauteile in möglichst einfacher und flexibler Weise definiert und prozesssicher verbunden werden können.

Zur Lösung dieser Aufgabe wird ein Dachmodul mit den Merkmalen des Patentanspruchs 1 vorgeschlagen.

Dabei werden die einzelnen Bauteile des Dachmoduls, insbesondere der eine Grundstruktur bildende Träger sowie ein an dem Träger angeordnetes Dachbeplankungselement durch ein aushärtbar aufbringbares Formteil gefügt, wobei das Formteil zu dem Träger und zu dem Dachbeplankungselement Anlagebereiche aufweist und wobei diese Anlagebereiche Abschnitte mit Haftung und Abschnitte ohne Haftung zwischen dem Formteil und dem Träger bzw. dem Dachbeplankungselement aufweisen. Unter Träger ist dabei ein Bauteil des Dachmodules zu verstehen, das zumindest einen Anteil am Aufbau der weitgehend starren Struktur des Dachmodules hat. Die wesentliche Aufgabe des Dachbeplankungselements ist die Verwirklichung einer Funktionalität, wie beispielsweise der optische Gesamteindruck oder auch die Frage der Lichtdurchlässigkeit. Unter den Begriffen Abschnitte mit Haftung bzw. Abschnitte ohne Haftung ist zu verstehen, dass das Formteil im aufgebrachten Zustand beziehungsweise während des Aufbringens nicht fest an dem Träger bzw. an dem Dachbeplankungselement anliegt, sondern in den Abschnitten ohne Haftung zumindest eine gewisse Verschiebbarkeit und Flexibilität an der Grenzfläche zwischen Formteil und Träger bzw. Dachbeplankungselement besteht. Mit dieser Verschiebbarkeit oder Flexibilität kann beispielsweise ein unkontrollierter Bauteilverzug, z. B. bei einer thermischen Ausdehnung verhindert oder zumindest deutlich reduziert werden. Das Fügen des Trägers mit dem Dachbeplankungselement durch das aushärtbar aufbringbare Formteil kann durch weitere, verbindende Maßnahmen zur Anordnung des Trägers und des Beplankungselements zueinander unterstützt werden. Erfindungsgemäß härtet das Formteil erst in der aufgebrachten Position, das heißt in der Position in der mit dem Formteil der Träger mit dem Dachbeplankungselement gefügt wird, aus.

Um die Abschnitte ohne Haftung definieren zu können ist in günstiger Weiterbildung der Erfindung ein Trennmittel zwischen dem Formteil und dem Träger bzw. dem Beplankungselement angeordnet. Mit einem solchen Trennmittel wird in einfacher und preisgünstiger Weise der erwünschte Effekt von Abschnitten, in denen das Formteil nicht fest mit dem Träger bzw. dem Beplankungselement verbunden ist, realisiert.

Anstatt eines separaten Trennmittels besteht auch die Möglichkeit, einander anliegende Flächen durch eine entsprechende Gestaltung der Oberfläche, insbesondere in Bezug auf die Textur, nicht haftend auszubilden.

Mit Vorteil befinden sich die Abschnitte ohne Haftung zwischen dem Formteil und dem Träger, da hier ein Ausgleich eines möglichen Bauteilverzugs in einfacher Weise und ohne jede Beeinträchtigung der Funktionalität der Dichtigkeit des Dachbeplankungselementes erfolgen kann.

Weiter ist es sinnvoll, wenn das Beplankungselement und der Träger als eine Baugruppe ausgebildet sind und durch entsprechende Verbindungsmaßnahmen auch ohne das Formteil bereits zumindest zueinander positioniert sind. Dabei ist weiter mit Vorteil diese Baugruppe oder auch deren einzelne Elemente mit dem aushärtbar aufbringbaren Formteil umschäumt und/oder umspritzt. Das Material für das Formteil härtet erst nach dem Anbringen an die aus Träger und Beplankungselement gebildete Baugruppe des Dachmoduls aus, so dass das Formteil entsprechend flexibel hergestellt werden kann.

Auch das Formteil selbst kann dabei aus mehreren Komponenten bestehen. Während beim Umspritzen insbesondere definierte Konturen erzeugt werden können, hat das Aufschäumen den Vorteil, dass auch Hohlraumstrukturen in einfacher Weise ausgefüllt werden können.

Der Träger und das Beplankungselement als Bestandteile einer Baugruppe des Dachmoduls weisen in günstiger Ausbildung eine direkte Verbindung auf, die diese beiden Elemente zueinander vorpositioniert. Weiter mit Vorteil ist diese direkte Verbindung eine Klebeverbindung. Klebeverbindungen sind sicher und flexibel einsetzbar und werden auch durch einen nicht wärmebehafteten Prozess erzeugt, wodurch keine Probleme durch Bauteilverzug entstehen.

In der Erfindung ist der Träger des Dachmoduls als ein geschlossener Rahmen ausgebildet. Daraus resultiert eine hohe Steifigkeit bei geringem Gewicht. Des Weiteren kann das Dachbeplankungselement in einem geschlossenen Rahmen umlaufend gehaltert werden, so dass eine dichte, spielfreie und damit nicht klapperanfällige Konstruktion gegeben ist. Zur weiteren Gewichtsoptimierung besteht der Träger aus Mg-Druckguss. Die Verwendung von Mg-Druckguss führt bei einem vergleichsweise geringen Eigengewicht des Trägers zu einer hohen Stabilität.

Eine vorteilhafte Ausgestaltung der Erfindung liegt darin, das Beplankungselement als Scheibe auszubilden, da damit bei einem Cabriolet die von den Nutzern eines solchen Fahrzeugs als angenehm empfundene Offenheit auch im geschlossenen Zustand des Fahrzeuges durch den entsprechenden Lichteinfall zu simulieren ist. Die Scheibe besteht dabei vorzugsweise aus Polycarbonat, was zu einem geringen Gewicht und der Möglichkeit vollständiger Durchsichtigkeit führt. Da die Struktur des Dachmoduls durch den Träger gewährleistet wird, kann das Material für die Scheibe anhand anderer Kriterien, wie Gewicht, Durchsichtigkeit, Witterungsbeständigkeit etc. ausgewählt werden.

Weiter mit Vorteil kann die Scheibe eine Mehrkomponentenscheibe sein, wobei vorzugsweise zwei Scheiben aufeinanderliegend angeordnet werden. Zwischen den beiden Scheiben können beispielsweise elektro- oder photochrome Materialen angeordnet werden, mit denen die Möglichkeit besteht, die Scheibe abzudunkeln.

Des Weiteren kann eine der beiden Scheiben auch als Blende verwendet werden, um in den Randbereichen der oberen, vorzugsweise komplett durchsichtigen Scheibe, optisch aufzuwerten.

Weiter ist es sinnvoll das Formteil des Dachmoduls als Soft-Tooling Bauteil auszubilden, da damit in einfacher und kostengünstiger Weise ein flexibles Formteil erzeugt werden kann.

Weitere Vorteile und Ausgestaltungen der Erfindung können der Beschreibung zu dem in der Zeichnung dargestellten Ausführungsbeispiel sowie den angehängten Patentansprüchen entnommen werden.

In der Zeichnung zeigt:
- Fig. 1: den Träger eines Dachmoduls in Explosionsdarstellung
- Fig. 2: eine Schnittdarstellung des Dachmoduls

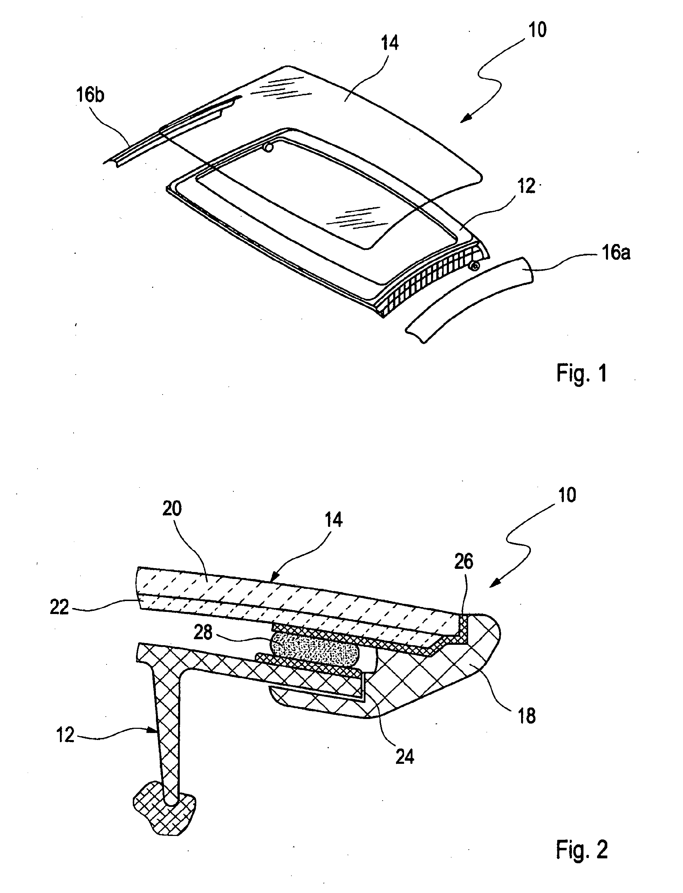

Fig. 1 zeigt ein Dachmodul 10 als Teil eines nicht weiter dargestellten Klappverdecks eines Cabrioletfahrzeugs. Klappverdecke von Cabrioletfahrzeugen bestehen aus mindestens zwei aneinander angelenkten, weitgehend starren Dachmodulen die beim Öffnen des Daches in parallele Ebenen verschwenkt werden können, in denen die einzelnen Dachmodule einander anliegen.

In Fig. 1 ist das Dachmodul 10 mit einem Träger 12 und einem Beplankungselement 14 gezeigt, wobei der Träger und das Beplankungselement eine gemeinsame Baugruppe bilden.

Des Weiteren sind Anbauteile 16a, 16b gezeigt, die in Fahrtrichtung, also in Längsrichtung des Fahrzeuges, rechts und links an dem Träger 12, beispielsweise durch Einklipsen befestigt werden können.

Der Träger 12 ist dabei als geschlossener, weitgehend rechteckförmiger Rahmen ausgebildet. Der Träger 12 besteht aus einer Mg-Druckgusslegierung und wird in herkömmlicher Weise in einer kathodischen Tauchlackierung grundiert und anschließend pulverbeschichtet oder in sonstige, bekannter Weise in mit einer Oberflächenbeschichtung versehen.

Da der Träger 12 im fertig montierten Zustand des Dachs nicht sichtbar ist, kann auf eine Lackierung in Fahrzeugfarbe verzichtet werden. Eine solche Lackierung in Fahrzeugfarbe ist ggf. für die sichtbaren Seitenteile 16a, 16b sowie für das Dachbeplankungselement 14 erforderlich.

In der dargestellten Ausführungsform ist das Dachbeplankungselement 14 aus einem lichtdurchlässigen Kunststoff vorzugsweise aus Polycarbonat gefertigt. Es ist ohne weiteres ersichtlich, dass das Dachbeplankungselement 14 somit ein Designelement des Fahrzeuges ist, wobei es gleichfalls aus einem Sicherheitsglas oder auch aus einem ggf. in Wagenfarbe lackierten Kunststoff- oder Blechteil bestehen kann.

Aus der Explosionsdarstellung in Figur 1 ist ersichtlich, dass das Dachbeplankungselement 14 in den Träger 12 eingesetzt ist und mit diesem eine weitgehend glatte und durchgängige Oberfläche bildet.

Auch die Seitenteile 16a, 16b können gewichtssparend aus einem Kunststoff hergestellt sein, der ggf. in Wagenfarbe lackiert werden kann.

Bei dem gezeigten Dachmodul handelt es sich dabei vorzugsweise um das Vorderteil eines aus mehreren Elementen bestehenden Klappverdecks, da sich damit die ggf. mit einem durchsichtigen Dachbeplankungselement ausgestattete Öffnung in dem den Träger 12 bildenden geschlossenen Rahmen in den Bereich der Vordersitze des nichtgezeigten Fahrzeugs überdeckt.

In Fig. 2 ist eine Schnittdarstellung eines Teils des Dachmoduls 10 gezeigt. Aus dieser Darstellung ist insbesondere ersichtlich, wie der als Mg-Druckgussrahmen ausgebildete Träger 12 und das zumindest teilweise durchsichtig ausgebildete Dachbeplankungselement 14 zueinander angeordnet und mit Hilfe eines Formteils 18 gefügt sind.

Das Dachbeplankungselement 14 besteht aus einer Mehrkomponentenscheibe, mit einer oberen Scheibe 20 und einer unteren Scheibe 22. Während die obere Scheibe 20 die komplette Öffnung des als geschlossenen Rahmen ausgebildeten Trägers 12 überdeckt, kann die untere Scheibe 22 entweder auch die gesamte Öffnung überdecken und damit mit der oberen Scheibe 20 eine Zweikomponentenscheibe bilden oder die untere Scheibe 22 bildet ihrerseits einen Rahmen in dem Bereich, in dem die obere Scheibe 20 dem Träger 12 aufliegt, um in diesem Übergangsbereich eine optische Blende zu bilden und den Übergang zwischen der durchsichtigen Scheibe und dem nicht durchsichtigen Träger zu kaschieren.

Die untere Scheibe 22 kann hierzu beispielsweise einen Schwarzbereich aufweisen. In gleicher Weise kann auch die Scheibe 20 bei alleiniger Verwendung einen eingefärbten oder aufgedruckten Schwarzbereichs aufweisen, um den Randbereich der Scheibe optisch zu kaschieren.

Die Baugruppe besteht aus dem Träger 12 und dem Dachbeplankungselement 14 sind von dem Formteil 18 umlaufend umgeben. Das Formteil 18 besteht aus einem aushärtbar aufbringbaren Material, z. B. Polyurethan, und wird angeschäumt oder im Soft-Tooling-Verfahren angespritzt. Das Polyurethan härtet aus und bildet das in Fig. 2 gezeigte Formteil 18. Das Formteil 18 ist sowohl das Dachbeplankungselement 14 als auch den Träger 12 umlaufend angeordnet und positioniert somit diese beiden Teile zueinander.

Da das Aufbringen des Polyurethans, wobei in gleicher Weise ein anderes thermoplastisches Elastomer zur Anwendung kommen kann, ein wärmebehafteter Prozess ist, kann es auf Grund der unterschiedlichen Wärmeausdehnungskoeffizienten des Trägers bzw. des Dachbeplankungselementes zu Spannungen bzw. zu einem unkontrollierten Bauteilverzug mit entsprechenden negativen Auswirkungen auf Funktion und Optik des gesamten Bauteils kommen. Um diese auftretenden Spannungen auszugleichen sind bestimmte Anlagebereiche des Formteils 18 an den Träger 12 nichthaftend ausgebildet, das heißt, dass in diesen Bereichen insbesondere beim Aushärtvorgang des das Formteil bildende Polyurethans ein einfaches Verschieben des Formteils 18 gegenüber dem Träger 12 erfolgen kann.

In den Bereichen, in denen keine Haftung zwischen dem Träger und dem Formteil bestehen soll, ist im Ausführungsbeispiel ein Trennmittel 24 zwischen den beiden Bauteilen angeordnet. Dieses Trennmittel kann eine Beschichtung oder auch ein eingelegtes oder aufgeklebtes Band sein.

In dem Bereich 26 besteht Haftung zwischen dem Formteil 18 und dem Träger 12 bzw. dem Dachbeplankungselement 14, um die für die das Fügen der Bauteile notwendigen Kräfte übertragen zu können.

Bevor das thermoplastische Elastomer zur Bildung des Formteils angespritzt oder angeschäumt wird, wird das Dachbeplankungselement 14 über eine Kleberaupe 28 an dem Träger 12 vorpositioniert, so dass diese beiden Bauteile eine Baugruppe bilden. Da diese Vorpositionierung innerhalb der Baugruppe unverändert bleiben soll, ist dies ein Bereich, in dem Haftung zwischen den Bauteilen gegeben ist, das heißt ein Bereich, in dem kein Ausgleich von durch thermische Effekte erzeugten Spannungen erfolgt.

Die Idee der Erfindung ist es, bei einem Dachmodul, insbesondere für ein Verdeck eines Cabrioletfahrzeugs, einen als Rahmen ausgebildeten Träger mit einem Dachbeplankungselement zu verbinden und mittels eines aushärtbar aufbringbaren Formteils zu fügen, ohne das es durch den wärmebehafteten Prozess des Aufbringens des Formteils zu Bauteilverzügen auf Grund von unterschiedlicher Wärmeausdehnungskoeffizienten kommt.

## Patentansprüche

1. Dachmodul bei einem Klappverdeck eines Cabrioletfahrzeugs, bestehend aus einem Träger (12), der als geschlossener Rahmen ausgebildet ist und eine Grundstruktur des Dachmoduls bildet, mit einem an dem Träger angeordneten Dachbeplankungselement (14) und zumindest einem Formteil (18) aus einem aushärtbar aufbringbaren Material, wobei das Formteil zu dem Träger (12) und zu dem Dachbeplankungselement (14) Anlagebereiche (24, 26) aufweist und durch das der Träger und das Dachbeplankungselement gefügt sind, wobei diese Anlagebereiche Abschnitte mit Haftung (26) und Abschnitte ohne Haftung (24) aufweisen.

2. Dachmodul nach Anspruch 1,
**dadurch gekennzeichnet, dass**
in den Abschnitten ohne Haftung ein Trennmittel (24) zwischen dem Formteil (18) und dem Träger (12) bzw. dem Dachbeplankungselement (14) angeordnet ist.

3. Dachmodul nach Anspruch 1 oder 2,
**dadurch gekennzeichnet, dass**
die Abschnitte ohne Haftung (24) im Anlagebereich des Formteils (18) an dem Träger (12) ausgebildet sind.

4. Dachmodul nach Anspruch 2 oder 3,
**dadurch gekennzeichnet, dass**
das Dachbeplankungselement (14) und der Träger (12) als eine Baugruppe ausgebildet sind.

5. Dachmodul nach Anspruch 4,
**dadurch gekennzeichnet, dass**
durch das Formteil (18) aus einem aushärtbar aufbringbaren Material die Baugruppe bestehend aus Träger (12) und Dachbeplankungselement (14) umschäumt und/oder umspritzt ist.

6. Dachmodul nach einem der vorhergehenden Ansprüche,
**dadurch gekennzeichnet, dass**
der Träger (12) und das Dachbeplankungselement (14) eine direkte Verbindung aufweisen.

7. Dachmodul nach Anspruch 6,
**dadurch gekennzeichnet, dass**
die direkte Verbindung eine Klebeverbindung (28) ist.

8. Dachmodul nach einem der vorhergehenden Ansprüche,
**dadurch gekennzeichnet, dass**
der Träger (12) aus Druckguss, vorzugsweise aus Mg-Druckguss besteht.

9. Dachmodul nach einem der vorhergehenden Ansprüche,
**dadurch gekennzeichnet, dass**
das Dachbeplankungselement eine Scheibe (20) ist.

10. Dachmodul nach Anspruch 9,
**dadurch gekennzeichnet, dass**
die Scheibe (20) aus Polycarbonat besteht.

11. Dachmodul nach einem der vorhergehenden Ansprüche,
**dadurch gekennzeichnet, dass**
das Formteil (18) in einem Soft-Tooling-Verfahren aufgebracht ist.

12. Dachmodul nach einem der vorhergehenden Ansprüche,
**dadurch gekennzeichnet, dass**
das Formteil (18) aus einem thermoplastischen Elastomer, vorzugsweise aus Polyurethan besteht.

## Claims

1. Roof module in a folding top of a convertible vehicle, comprising a support (12) designed as a closed frame and forming a basic structure of the roof module, a roof cladding element (14) and at least one moulding (18) made of a material which can be applied in a curable state, wherein the moulding has contact regions (24, 26) towards the support (12) and the roof cladding element (14) and the support and the roof cladding element are joined thereby, these contact regions having sections with adhesion (26) and sections without adhesion (24).

2. Roof module according to claim 1,
**characterised in that**
a release agent (24) is placed between the moulding (18) and the support (12) or the roof cladding element (14) respectively in the sections without adhesion.

3. Roof module according to claim 1 or 2,
**characterised in that**
the sections without adhesion (24) are formed in the contact region between the moulding (18) and the support (12).

4. Roof module according to claim 2 or 3,
**characterised in that**
the roof cladding element (14) and the support (12) are designed as an assembly.

5. Roof module according to claim 4,
**characterised in that**
the assembly made up from the support (12) and the roof cladding element (14) is encapsulated by the moulding (18) made of a material which can be applied in a curable state in a foaming and/or injection moulding process.

6. Roof module according to any of the preceding claims, **characterised in that**
the support (12) and the roof cladding element (14) have a direct connection.

7. Roof module according to claim 6,
**characterised in that**
the direct connection is an adhesive-bonded joint (28).

8. Roof module according to any of the preceding claims, **characterised in that**
the support (12) is a die casting, preferably an Mg die casting.

9. Roof module according to any of the preceding claims, **characterised in that**
the roof cladding element is a disc (20).

10. Roof module according to claim 9,
**characterised in that**
the disc (20) is made of polycarbonate.

11. Roof module according to any of the preceding claims, **characterised in that**
the moulding (18) is applied in a soft tooling process.

12. Roof module according to any of the preceding claims, **characterised in that**
the moulding (18) is made of a thermoplastic elastomer, preferably of polyurethane.

## Revendications

1. Module de toit pour un toit décapotable d'un véhicule cabriolet, comprenant un support (12) qui est conçu comme un cadre fermé et forme une structure de base, doté d'un élément de recouvrement de toit (14) et au moins une pièce moulée (18) fabriquée en matériau durcissable, la pièce moulée (18) présentant pour le support (12) et pour l'élément de recouvrement de toit (14) des zones d'appui (24, 26) et permettant l'assemblage du support et de l'élément de recouvrement de toit, ces zones d'appui présentant des sections de liaison adhésive (26) et des sections sans liaison adhésive (24).

2. Module de toit selon la revendication 1, **caractérisé en ce que** dans les sections sans liaison adhésive est disposé un moyen de séparation (24) entre la pièce moulée (18) et le support (12) ou l'élément de recouvrement de toit (14).

3. Module de toit selon la revendication 1 ou la revendication 2, **caractérisé en ce que** les sections sans liaison adhésive sont conçues dans la zone d'appui de la pièce moulée (18) sur le support (12).

4. Module de toit selon la revendication 2 ou la revendication 3, **caractérisé en ce que** l'élément de recouvrement de toit (14) et le support (12) sont conçus comme un ensemble.

5. Module de toit selon la revendication 4, **caractérisé en ce que** au moyen de la pièce moulée (18) réalisée en matériau durcissable l'ensemble constitué du support (12) et de l'élément de recouvrement de toit (14) et le support (12) est enrobé et/ou expansé.

6. Module de toit selon l'une quelconque des revendications précédentes, **caractérisé en ce que** le support (12) et l'élément de recouvrement de toit (14) présentent une liaison directe.

7. Module de toit selon la revendication 6, **caractérisé en ce que** la liaison directe est une liaison adhésive (28).

8. Module de toit selon l'une quelconque des revendications précédentes, **caractérisé en ce que** le support (12) est constitué d'une coulée sous pression, de préférence une coulée sous pression de Mg.

9. Module de toit selon l'une quelconque des revendications précédentes, **caractérisé en ce que** l'élément de recouvrement de toit (14) est une vitre (20).

10. Module de toit selon la revendication 9, **caractérisé en ce que** la vitre (20) est réalisée en polycarbonate.

11. Module de toit selon l'une quelconque des revendications précédentes, **caractérisé en ce que** la pièce moulée (18) est appliquée selon le procédé soft-tooling.

12. Module de toit selon l'une quelconque des revendications précédentes, **caractérisé en ce que** la pièce moulée (18) est constituée d'un élastomère thermoplastique, de préférence du polyuréthane.
